Europäisches Patentamt

(19) European Patent Office

Office européen des brevets

(11) Publication number: **0 119 061**
**B1**

(12)                           EUROPEAN PATENT SPECIFICATION

(45) Date of publication of patent specification: **18.05.88**

(21) Application number: **84301538.9**

(22) Date of filing: **08.03.84**

(51) Int. Cl.⁴: **F 16 L 47/02,** F 16 L 41/02,
B 29 C 65/04, B 29 C 65/22

(54) **Improvements in or relating to weldable pipe fittings.**

(30) Priority: **09.03.83 GB 8306470**
**04.11.83 GB 8329479**

(43) Date of publication of application:
**19.09.84 Bulletin 84/38**

(45) Publication of the grant of the patent:
**18.05.88 Bulletin 88/20**

(84) Designated Contracting States:
**AT BE CH DE FR IT LI NL SE**

(56) References cited:
**AT-B- 239 018**
**AT-B- 328 235**
**CH-A- 515 449**
**DE-A-2 724 981**
**GB-A-1 491 760**
**US-A-3 907 625**
**US-A-3 954 541**

(73) Proprietor: **VICTAULIC PLC**
**P.O. Box 13 46-48 Wilbury Way**
**Hitchin Hertfordshire SG4 0AP (GB)**
(73) Proprietor: **RUTLAND PLASTICS LIMITED**
**Cold Overton Road**
**Oakham Rutland Leicestershire (GB)**

(72) Inventor: **Williams, Richard George**
**3 Beech Drive**
**St. Ives Cambridgeshire (GB)**

(74) Representative: **Heath, Peter William Murray**
**FRY HEATH & CO. Seloduct House Station Road**
**Redhill Surrey RH1 1NF (GB)**

Courier Press, Leamington Spa, England.

## Description

This invention relates to weldable thermoplastic members such as pipe fittings of the kind formed of thermoplastic materials for connecting to thermoplastic pipes or pipe-like members in which a part of a wall of the fitting is arranged to be joined by fusion or "welding" to the outside peripheral wall of a pipe or pipe-like member, the fusion being by means of electric heating wire located at or adjacent the appropriate mating surfaces of the fitting and of the pipe or pipe-like member.

The invention particularly, although not exclusively, relates to "saddle" fittings. Saddles are fittings adapted to be secured to the side of a pipe to enable a branch or side pipe to be connected thereto.

US-A-3954541 proposes a method of welding a thermoplastic flange to a tube by using a helically coiled resistance wire covered by a thermoplastic jacket provided from powder by heating the wire. The jacketed wire is bent to a star shape, placed on a flange and heated, by passing current through the wire, so as to bond it to the flange, and subsequently to bond the flange to the tube.

It has been also proposed previously, in GB-A—1491760 for example, to provide such a fitting in which the fusion heating wire is provided in the form of a mat constructed from closely wound plastic coated resistance wire, the wire insulation being partially welded together. However, such an arrangement is prone to mechanical damage, and in addition a practice is developing of utilising special alloy electric resistance wires requiring, for safety reasons, a lower welding voltage for fusing the saddle fitting to the pipe. Such special alloy wires are not readily obtainable with appropriate plastic insulation coatings.

It is an object of the present invention to provide a weldable thermoplastic member which overcomes or at least substantially reduces the above mentioned difficulties.

According to the invention there is provided a method of producing a weldable thermoplastic pipe saddle fitting including forming a thermoplastic body member having a pipe facing surface, and bonding a heating wire to the pipe facing surface characterised by the steps of forming a disc of thermoplastic material; securing to the disc an electrical heating wire by the steps of forming the wire into a desired configuration; applying the wire to a face of the disc; and fusing the wire to the face of the disc by briefly passing current through the wire whereby material of the disc melts and then resets to hold the wires; abutting the disc against said pipe facing surface of the body member and fusing it thereto by passing current through the heating wire whereby the heating wire is embedded therebetween.

By the expression "pipe or pipe-like member" as used herein we mean, in addition to pipes such as, associated members for pipework usage such as couplers, tees 45° and 90° elbows, flange adaptors and reducers, for example.

The disc may be annular. Such a configuration is particularly appropriate with a saddle fitting. In this case the disc can surround the opening of the branch or side pipe.

The disc may be flexible so as to be capable of deformation to the configuration of said surface of the body member.

The heating wire may be set out in any desired pattern on the face of the disc of thermoplastic material. Thus, the wire may run from the outer edge of the disc towards the centre thereof in a generally helical configuration. Such a helix may be of usual curvilinear configuration, but may alternatively be provided with rectilinear portions, so that the overall plan appearance of the wire pattern is, for example, rectangular.

Where the heating wire is laid out in helical pattern, an electrically insulating bridge member, which may be grooved, may be provided across the face of the disc to enable the wire to be brought from adjacent the centre of the disc back to the edge thereof. The two ends of the wire may be connected adjacent the disc edge to electrical terminals.

In an alternative arrangement the heating wire may be laid out backward and forward across the face of the disc, or towards the centre and back from the centre of the disc in a "daisy petal" pattern.

It will be appreciated that the spacing of the wire across the face of the disc is, in practice, calculated such that when the formed fitting is to be welded to a pipe there is sufficient length of wire of a predetermined electrical resistance to ensure that the necessary energy can be provided to carry out the welding fusion of the saddle to the pipe.

The pipe saddle moulding may be injection moulded in a conventional manner, and may have in the said surface a recess stretching radially thereacross capable of receiving the above mentioned bridge member (where provided) upon assembly of the disc with the saddle.

After formation of the fitting as hereinabove mentioned, it will be fitted to an underlying pipe at a desired position, and may be moved into intimate contact therewith by means of pressure whilst fusing the saddle to the pipe by passing current through the wire.

In order that the present invention may be more readily understood, embodiments thereof will now be described by way of example with reference to the accompanying drawings in which:

Figure 1 is an isometric view of a saddle moulding together with its associated resistance wire disc in accordance with the invention; and

Figures 2, 3 and 4 illustrate alternative disc and wire configurations for the saddle of Figure 1.

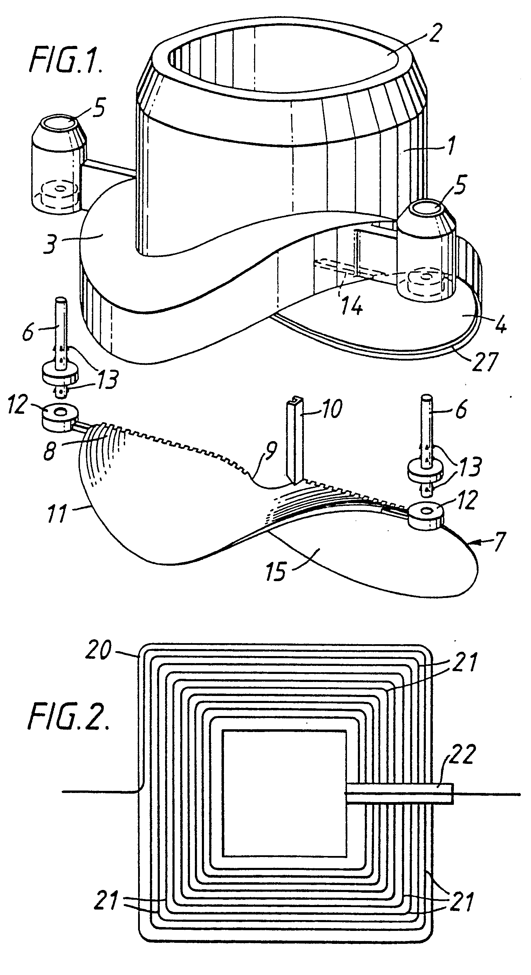

Referring now to Figure 1 it will be seen that there is provided a thermoplastic saddle fitting moulding 1 incorporation an internal bore 2 and a flange portion 3 and having a surface 4 shaped to correspond to the wall of the pipe to which the fitting is to be connected (not shown). Diametrically opposed housings 5 are provided adapted in use to receive electrical terminal posts 6. The saddle fitting moulding 1 is injection moulded.

2

Associated with the saddle fitting is a thermoplastic disc 7 provided with an inner opening 9 corresponding to the bore 2 of the saddle fitting. A grooved flap 10 is formed with the disc, the flap being connected to the disc adjacent the bore passing therethrough, and acting in use, as a bridge for electrical heating wire and being capable of folding across the disc to the outer periphery 11 thereof. Also forming part of the disc are electrical terminal supports 12 which correspond in position to the terminal housings 5 on the saddle moulding 1. An electric resistance wire (not shown) is formed, in a manner like that described in relation to Figure 2, into a helical path 8 from one terminal post 6 mounted on a terminal support 12, into the flap 10 which is then folded across the disc so that the wire can be connected through the other of the terminal posts 6 on the other support 12. The flap 10 acts as an electrically insulating bridge for the wire passing therethrough from the wire located in the spiral path 8.

It is to be observed that the terminal posts 6 are provided with barb-like projections 13 so that upon insertion thereof in the supports 12 and subsequently into the housings 5 the barbs 13 on the terminal posts 6 assist permanent assembly.

The internal surface 4 of the saddle moulding 1 facing towards the disc 7 is provided with a recess 14 adapted in use to receive the flap 10 extending across the disc.

For assembly the disc 7 with its associated terminal posts 6 is brought into association with the corresponding surface 4 of the saddle with the terminal posts 6 located within the housings 5 such that the barbs 13 thereon provide an interference fit therein. The disc 7 is then, by means of a suitable pressure, brought into intimate contact over the surface 4 of the saddle moulding 1. A controlled electrical current is then passed through the heating wire for a predetermined period of time whereby the disc 7 is welded to the surface 4 of the saddle moulding 1, and the resistance wire embedded and encapsulated therebetween. It is to be observed that the surface 4 of the moulding 1 is provided with a peripheral downwardly protruding rib 27 which, when the disc 7 is held against the surface 4, abuts tightly against the periphery 11 of the disc 7. This prevents flow of thermoplastic material from between the disc 7 and surface 4 during the step of welding the disc to the surface.

The saddle fitting is now ready for connection to a pipe by the simple expedient of placing its pipe facing surface (the surface 15 of disc 7) against the wall of the pipe concerned and then passing a current via the terminal posts 6 and through the resistance wire so as to fuse the surface 4, with the intervening disc 7, to the outer peripheral surface of the associated thermoplastic pipe. Thereafter an opening is cut in the pipe wall corresponding to the bore 2 of the saddle fitting and without cutting or disturbing the resistance wire.

It will be appreciated that the saddle fitting can be any desired shape and configuration for any particular shape or pipe or pipe-like member to which it is to be connected and can indeed have a configuration adapted to receive a plurality of branch outlets i.e. it can have a plurality of bore-like portions.

The disc 10 of Figure 2 is generally similar to that of Figure 1. In this case however, it is formed of thin flexible thermoplastic material in a rectangular configuration. Heating wire 21 previously wound around former pins into the rectangular helix shape illustrated, is placed against the surface of the disc 20 and fused thereto by briefly passing current through the wire 21. This has the effect of embedding slightly the wire 21 in the disc 20.

To enable the return of the inner end of the wire 20, a thermoplastic electrically insulating bridge piece 22 is provided, the bridge piece being notched at each end so that the wire can be secured thereto.

The bridge piece is lightly fused to the disc at each end.

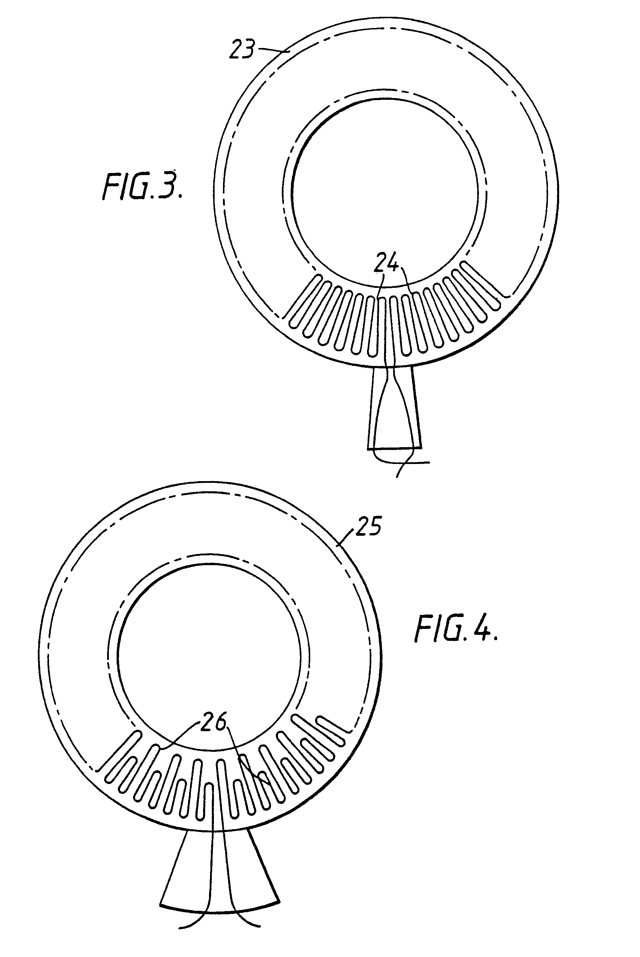

The disc 23 of Figure 3 is similar in general principle to that of Figure 2. In this case however, the wire 24 is laid out in a generally radial "daisy petal" array such that any tendency during welding of the fitting for melted thermoplastic material to move outwardly under pressure will have a reduced likelihood of displacing any significant part of the heating wire.

Figure 4 shows a variation of the arrangement of Figure 3. In this case greater equalisation of heating across the disc 25 is ensured by arranging that alternate loops of the heating wire 26 only penetrate part way across the disc annulus.

By means of the invention as specifically described hereinabove, we have provided a saddle fitting of convenient utility readily adapted for quick and simple fusion welding to the wall of a pipe or pipe-like member.

**Claims**

1. A method of producing a weldable thermoplastic pipe saddle fitting including forming a thermoplastic body member (1) having a pipe facing surface (4) and bonding a heating wire (8, 21, 24, 26) to the pipe facing surface (4) characterised by the steps of forming a disc (7, 20, 23, 25) of thermoplastic material; securing to the disc (7, 20, 23, 25) an electrical heating wire (8, 21, 24, 26) by the steps of forming the wire into a desired configuration; applying the wire (8, 21, 24, 26) to a face of the disc (7, 20, 23, 25) and fusing the wire (8, 21, 24, 26) to the face of the disc (7, 20, 23, 25) by briefly passing current through the wire whereby material of the disc melts and then resets to hold the wire; abutting the disc (7, 20, 23, 25) against said pipe facing surface (4) of the body member (1) and fusing it thereto by passing current through the heating wire (8, 21, 24, 26) whereby the heating wire is embedded therebetween.

2. A method as claimed in Claim 1 wherein the disc (7, 20, 23, 25) is formed in an annular configuration.

3. A method as claimed in Claim 1 or 2 wherein the disc (7, 20, 23, 25) is formed such as to be flexible.

4. A method as claimed in Claim 1, 2 or 3 wherein the wire (8, 21, 24, 26) is partially embedded in the surface of the disc (7, 20, 23, 25) as it is bonded thereto.

5. A method as claimed in any one of Claims 1 to 4 wherein the heating wire (8, 21, 24, 26) is disposed across the disc (7, 20, 23, 25) in a generally helical configuration.

6. A method as claimed in Claim 5 wherein the helix is provided with rectilinear portions whereby, in overall plan appearance the wire pattern is rectangular.

7. A method as claimed in any one of Claims 1 to 4 wherein the heating wire (8, 21, 24, 26) is disposed in a backward and forward configuration across or around the disc.

**Patentansprüche**

1. Herstellung von schweißbaren thermoplastischen Rohr-Fittings zur Befestigung am Umfang eines Rohres, mit den Schritten der Ausbildung eines thermoplastischen Hauptteils (1) mit einer auf das Rohr gerichteten Oberfläche (4), und dem Verbinden eines Heizdrahtes (8, 21, 24, 26) mit der auf das Rohr gerichteten Oberfläche (4), gekennzeichnet durch die folgenden Schritte Formung einer Scheibe (7, 20, 23, 25) aus thermoplastischem Material, Befestigung eines elektrischen Heizdrahtes (8, 21, 24, 26) an der Scheibe (7, 20, 23, 25) durch Formen des Heizdrahtes auf eine gewünschte Form und Anbringen des Heizdrahtes (8, 21, 24, 26) an einer Fläche der Scheibe (7, 20, 23, 25) sowie durch Anschmelzen des Heizdrahtes (8, 21, 24, 26) an der Fläche der Scheibe (7, 20, 23, 25) durch kurzzeitiges Hindurchleiten eines Stromes durch den Heizdraht, sodaß das Material der Scheibe schmilzt und dann wieder erhärtet, um den Heizdraht festzuhalten, Anlegen der Scheibe (7, 20, 23, 25) gegen die auf das Rohr gerichtete Oberfläche (4) des Hauptteils (1), und Anschmelzen der Scheibe an den Hauptteil (1) durch Hindurchleiten eines Stromes durch den Heizdraht (8, 21, 24, 26), sodaß der Heizdraht zwischen diesen Teilen eingebettet wird.

2. Verfahren nach Anspruch 1, dadurch gekennzeichnet, daß die Scheibe (7, 20, 23, 25) kreisringförmig geformt wird.

3. Verfahren nach Anspruch 1 oder 2, dadurch gekennzeichnet, daß die Scheibe (7, 20, 23, 25) so geformt wird, daß sie flexibel ist.

4. Verfahren nach Anspruch 1, 2 oder 3, dadurch gekennzeichnet, daß der Heizdraht (8, 21, 24, 26) teilweise in die Oberfläche der Scheibe (7, 20, 23, 25) eingebettet wird, wenn er mit dieser verbunden wird.

5. Verfahren nach einem der Ansprüche 1—4, dadurch gekennzeichnet, daß der Heizdraht (8, 21, 24, 26) über die Scheibe (7, 20, 23, 25) hinweg in einer allgemeinen spiralförmigen Form angeordnet wird.

6. Verfahren nach Anspruch 5, dadurch gekennzeichnet, daß die Spirale mit geradlinigen Abschnitten versehen ist, sodaß das Drahtmuster in Gesammtdraufsicht rechtwinklig ist.

7. Verfahren nach einem der Ansprüche 1—4, dadurch gekennzeichnet, daß der Heizdraht (8, 21, 24, 26) in Rückwärts- und Vorwärtsrichtung über oder um die Scheibe herum gelegt ist.

**Revendications**

1. Procédé de fabrication d'un raccord pour tuyau par patte de fixation thermoplastique soudable comprenant le formage d'un corps thermoplastique (1) ayant une surface de contact (4) avec le tuyau et le collage d'un filament chauffant (8, 21, 24, 26) sur la surface de contact (4) avec le tuyau, caracterise par les étapes de formage d'un disque (7, 20, 23, 25) en matériau thermoplastique, d'application d'un filament électrique chauffant (8, 21, 24, 26) sur le disque (7, 20, 23, 25) selon les étapes successives de formage du filament selon une configuration voulue, d'application du filament (8, 21, 24, 26) sur une face du disque (7, 20, 23, 25) et de fusion du filament (8, 21, 24, 26) sur la face du disque (7, 20, 23, 25) par bref passage d'un courant dans le filement, ce qui fait fondre le matériau du disque qui reprend ensuite son état initial en emprisonnant le filament, de mise en contact du disque (7, 20, 23, 25) avec ladite surface de contact (4) avec le tuyau du corps (1) et de sa fusion avec celle-ci en faisant passer un courant dans le filament chauffant (8, 21, 24, 26), par suite de quoi le filament chauffant se trouve encastré entre les deux.

2. Procédé selon la revendication 1 dans lequel le disque (7, 20, 23, 25) adopte une configuration annulaire.

3. Procédé selon la revendication 1 ou 2 dans lequel le disque (7, 20, 23, 25) est formé de manière à être flexible.

4. Procédé selon la revendication 1, 2 ou 3 dans lequel le filament (8, 21, 24, 26) est partiellement encastré dans la surface du disque (7, 20, 23, 25) au moment du collage sur celle-ci.

5. Procédé selon l'une quelconque des revendications 1 à 4 dans lequel le filament chauffant (8, 21, 24, 26) est disposé sur le disque (7, 20, 23, 25) selon une configuration généralement hélicoïdale.

6. Procédé selon la revendication 5, dans lequel l'hélice possède des parties rectilinéaires, donnant ainsi une apparence d'ensemble rectangulaire lorsque le dessin du filament est vu en plan.

7. Procédé selon l'une quelconque des revendications 1 à 4 dans lequel le filament chauffant (8, 21, 24, 26) est disposé selon une configuration en forme de boucles successives sur et autour du disque.

FIG.1.

FIG.2.

0 119 061

FIG.3.

FIG.4.

2